**Europäisches Patentamt**

(19) **European Patent Office**

**Office européen des brevets**

(11) Numéro de publication: **0 218 520**
**B1**

## (12) FASCICULE DE BREVET EUROPÉEN

(45) Date de publication du fascicule du brevet:
**12.07.89**

(51) Int. Cl.⁴: **B 62 B 1/18**

(21) Numéro de dépôt: **86402096.1**

(22) Date de dépôt: **24.09.86**

(54) **Brouette.**

(30) Priorité: **25.09.85 FR 8514194**

(43) Date de publication de la demande:
**15.04.87 Bulletin 87/16**

(45) Mention de la délivrance du brevet:
**12.07.89 Bulletin 89/28**

(84) Etats contractants désignés:
**AT BE CH DE FR GB IT LI LU NL SE**

(56) Documents cité:
**FR-A-1 044 223**
**GB-A-6 788**
**GB-A-608 297**
**US-A-1 572 531**
**US-A-4 252 334**

(73) Titulaire: **Donze, Pierre, Clos Varegues St.**
**Andrieux, F-76930 Octeville S/Mer (FR)**
Titulaire: **Franck, Jean- Pierre, 3 Rue des Songes,**
**F-68850- Staffelfelden (FR)**

(72) Inventeur: **Donze, Pierre, Clos Varegues St.**
**Andrieux, F-76930 Octeville S/Mer (FR)**
Inventeur: **Franck, Jean- Pierre, 3 Rue des Songes,**
**F-68850- Staffelfelden (FR)**

(74) Mandataire: **CABINET BONNET- THIRION, 95**
**Boulevard Beaumarchais, F-75003 Paris (FR)**

## Description

La présente invention concerne une brouette destinée à être utilisée pour de petits transports.

Une brouette classique comprend un châssis avec deux bras formant brancards, des pieds de repos et un système de roulement situé à l'avant de la brouette.

Ce type de brouette présente plusieurs inconvénients pour les utilisateurs.

En premier lieu, on peut estimer à un tiers au moins de la charge le poids que l'usager doit soulever et porter en raison de la position du point d'appui sur le sol constitué par la ou les roues du système de roulement.

Un autre inconvénient est lié au fait que le système de roulement étant établi une fois pour toutes, l'emploi de la brouette peut être malaisé dans certains types de terrains (herbe, gravier, sable, boues).

Enfin, les brouettes connues ne présentent qu'une seule position stable en appui sur ses pieds de repos. Une telle position n'est pas avantageuse notamment pour le stockage.

Le brevet FR-A-1 044 223 décrit une brouette telle que définie au préambule de la revendication 1 avec une roue à au moins trois jantes dont l'une a un diamètre différent de celui des autres.

Ainsi, comme dans toutes les brouettes de l'art antérieur, on retrouve un système de roulement établi une fois pour toutes qui rend l'emploi de la brouette malaisé dans certains types de terrains (herbe, gravier, sable, boue) ou en courbe accentuée.

En effet, avec le système de roulement à roue simple des brouettes classiques, la surface de contact au sol et la pression exercée sont pratiquement constantes, quelle que soit la nature du sol et la roue s'y enfonce lorsqu'il est meuble ou mou, provoquant ainsi un accroissement de la résistance au roulement et aux changements de direction.

La roue complexe à jantes multiples de diamètres différents, décrite dans FR-A-1 044 223 ne remédie pas à ces défauts et peut même les aggraver, car l'augmentation du nombre de jantes en contact avec le sol implique l'enfoncement dans le sol de celles qui ont le plus grand diamètre ce qui provoque les mêmes résistances parasites que dans le cas de la roue simple et, en outre elle a l'inconvénient supplémentaire d'introduire, en courbe, une résistance de frottement due au glissement inévitable résultant du fait que le déplacement du point de contact entre jante et sol n'est pas alors le même pour toutes les jantes qui, pourtant, se déplacent de la même quantité puisqu'elles sont solidaires entre elles en rotation.

L'invention a pour objet une brouette qui pallie ces inconvénients tout en offrant d'autres avantages.

Elle propose à cet effet une brouette selon la revendication 1 qui:

- peut s'adapter à tous les types de terrains, puisqu'elle peut être équipée d'un jeu de roues, donc de surfaces de contact dont le nombre et l'écartement est déterminé au mieux pour limiter l'enfoncement dans le sol et les résistances parasites qui en résultent;

- permet tous les changements de direction, y compris à angles vifs, sans effort, quels que soient le nombre et la position des roues puisque chacune de ces roues peut tourner indépendamment des autres.

Selon une autre caractéristique définie dans la revendication 3, l'invention permet de faciliter les opérations de déchargement aussi bien vers l'avant que sur les côtes, tout en créant une position verticale stable de stockage qui réduit l'encombrement et facilite les opérations de nettoyage du réceptacle, les opérations d'entretien du système de roulement ainsi que le changement des roues.

D'autres avantages, caractéristiques et détails ressortiront de la description explicative qui va suivre faite en référence aux dessins annexés donnés à titre d'exemple et dans lesquels:

la figure 1 est une vue en perspective de la brouette conforme à l' invention:

la figure 2 est une vue en bout de la brouette de la figure 1;

la figure 3 est une vue de côté de la brouette conforme à l' invention:

les figures 4 à 7 sont des vues de dessous partielles de la figure 1 limitées à la structure de support de roue suivant quatre modes d'utilisation, et la figure 8 est une vue de côté représentant la brouette dans sa position verticale stable de stockage.

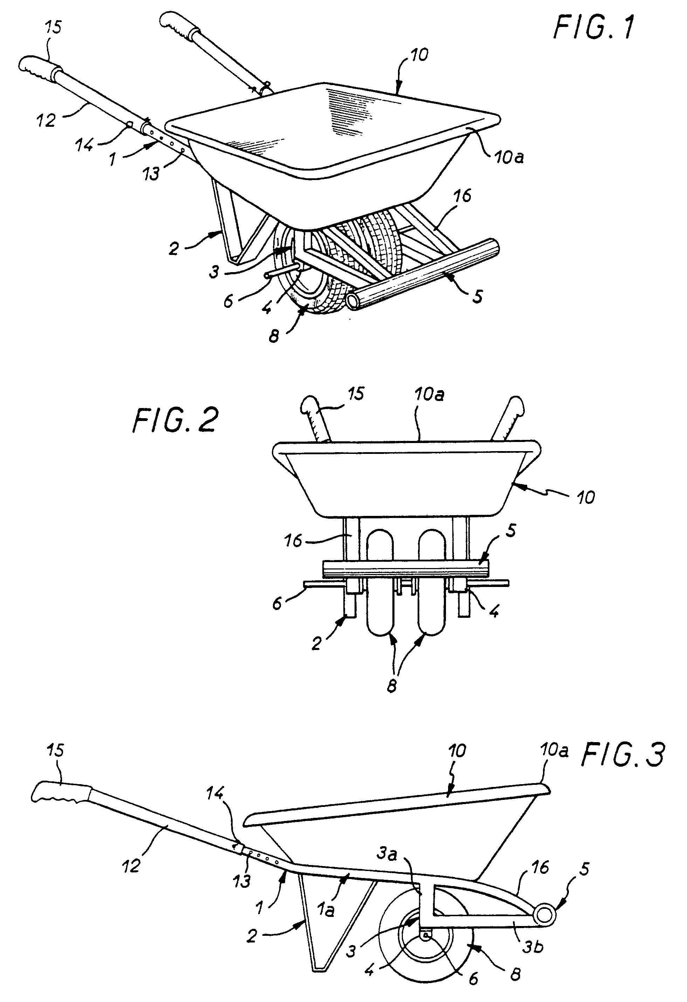

En référence aux figures 1 à 3, la brouette comprend un châssis 1a, deux bras 1 formant l'brancards, des pieds de repos 2, un réceptacle 10 et une structure de support 3 de roue avec un axe 6 équipé de deux roues 8.

Les deux bras 1 formant brancards qui partent du châssis 1a sont des bras inclinés vers le haut et vers l'extérieur pour se terminer par deux poignées 15 sensiblement parallèles au sol.

Le châssis 1a sert d'assise au réceptacle 10 monté de façon avantageusement amovible (non détaillée).

A l'avant du réceptacle 10, le châssis se prolonge par deux bras 16 sensiblement parallèles dont les extrémités libres sont soudées a un élément transversal 5 formant buté d'appui qui s'étend de part et d'autre des bras 16. Ces deux bras 16 sont légèrement repliés ou courbé en direction du sol, de manière à ce que la butée 5 soit située sensiblement au même niveau que l'axe 6.

La structure de support 3 de roue située au dessous du châssis la forme de chaque côte de celui-ci une équerre à deux branches 3a, 3b.

L'extrémité de la première branche 3a est soudée au châssis, alors que l'extrémité de la deuxième branche 3b est soudée à la butée 5.

Chaque équerre 3 supporte un palier 4 au niveau de son coude. Les deux paliers 4 sont axialement alignés de manière à supporter l'axe 6 des roues.

La structure de support 3 de roue est située sous le châssis 1a de telle sorte que l'axe 6 se trouve sensiblement à l'aplomb du centre de gravité du réceptacle 10.

Par ailleurs, le bord antérieur 10a du réceptacle est de son côté sensiblement à l'aplomb avec la butée 5.

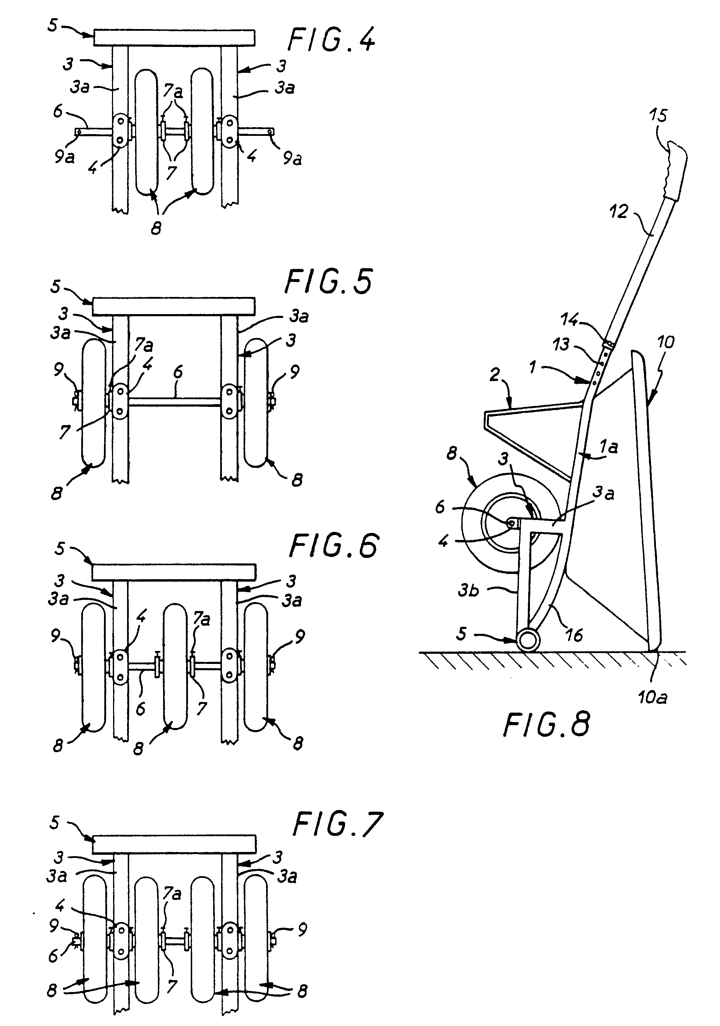

En se reportant à la figure 2, il est à noter que l'axe 6 s'étend au delà des deux paliers 4 de manière à pouvoir supporter au moins une roue extérieure vers chaque extrémité, et que la butée transversale 5 s'étend sensiblement sur une longueur égale ou légèrement inférieure à celle de l'axe 6 pour que ses deux extrémités soient sensiblement alignées avec les faces externes des roues extérieures respectives s'il y a lieu (figure 5 à 7).

Enfin, le châssis 1a supporte deux pieds de repos 2. Dans l'exemple illustré, chaque pied 2 présente une forme générale en V. La base du V sert de surface d'appui et les deux extrémités libres du V sont raccordées au châssis 1a par soudage.

En référence aux figures 4 à 7, il va être explicité plus en détail différentes possibilités de montage des roues 8.

Dans ces différents montages, les roues 8 sont toujours montées libres en rotation sur l'axe 6 par l'intermédiaire de roulements à billes, tout en étant montées coulissantes sur l'axe 6 pour régler à volonté leurs positions et leur écartement.

Une fois sa position déterminée, chaque roue 8 est immobilisée latéralement sur l'axe par l'intermédiaire de butées coulissantes 7 immobilisées en position par serrage au moyen de vis 7a par exemple.

Sur la figure 4, l'axe 6 supporte deux roues 8 situées entre les deux paliers 4. Chaque roue 8 est immobilisée sur l'axe 6 par deux butées coulissantes blocables 7 dans des positions voisines des paliers 4.

Sur la disposition de la figure 5, on retrouve deux roues 8 mais montées ici à l'extérieur des paliers 4 sur les parties terminales dépassantes de l'axe 6, chaque roue 8 étant immobilisée dans ce cas du côté extérieur par une goupille 9 engagée dans un passage 9a ménagé a cet effet près de l'extrémité de l'axe, tandis que du côté intérieur on retrouve une butée 7 en appui contre le palier 4 correspondant.

Cette même disposition se retrouve sur la figure 6, avec une troisième roue 8 immobilisée par deux butées 7 au centre de l'axe 6.

Sur la figure 7, l'axe 6 supporte deux roues internes 8 selon un montage semblable à celui de la figure 4 et deux roues externes 8 selon un montage semblable à celui de la figure 6.

Les différents montages de roues représentés sur les figures 4 à 7 offrent l'avantage que la disposition des butées 7 (figure 4), et des butées 7 et goupilles 9 (figures 5 à 7) maintiennent l'axe 6 en position sans nécessiter de moyens supplémentaires.

Le choix parmi ces différentes dispositions possibles des roues en nombre et en position permet une adaptation du système de roulement de la brouette aux diverses conditions d'utilisation, et en particulier à la nature du terrain.

La disposition à deux roues internes de la figure 4 convient en général au roulement sur terrain dur. Celle de la figure 5 à deux roues externes augmente la stabilité de la brouette en sens latéral.

En cas de terrain meuble (gravier par exemple) on peut avantageusement adapter la formule à trois roues de la figure 6. La disposition à quatre roues de la figure 7 pourra enfin être adaptée sur des terrains encore plus difficiles, par exemple sur un terrain boueux, de l'herbe, etc...

La figure 8 représente la position verticale stable de stockage de la brouette qui est appui sur la butée 5 et sur le bord antérieur 10a du réceptacle 10. Cette position facilite notamment les opérations de nettoyage du réceptacle, d'entretien, de réglage et de changement les roues.

La butée d'appui 5 selon l'invention offre par ailleurs le grand avantage de faciliter considérablement les opérations de déchargement du réceptacle soit vers l'avant, soit sur un côté et ceci avec le minimum d'efforts et en toute sécurité grâce à l'appui fixe offert par ladite butée.

Il est à noter enfin, que les brancards sont avantageusement du type télescopique. Pour cela, il est prévu un élément tubulaire 12 monté axialement coulissant sur chaque bras 1. Les éléments 12 et les bras 1 sont munis de trous 13 de manière à permettre leur solidarisation en position variable au moyen d'une goupille 14 par exemple. Le réglage télescopique de la longueur les bras permet d'adapter la hauteur des poignées 15 à la taille des usagers pour éviter les positions pénibles de transport.

On voit donc que l'invention réunit un ensemble d'avantages ayant pour effet d'augmenter le rendement du travail tout en améliorant le confort de l'usager:

- en réduisant au minimum le poids à porter;
- en offrant la possibilité de conditions de roulage adaptées à la nature du terrain;
- en stabilisant la position de la brouette dans les opérations de déchargement;
- en facilitant les opérations de nettoyage et d'entretien de la brouette, ainsi que le stockage de celle-ci.

L'invention n'est bien entendu par limitée aux détails de la forme de réalisation décrite à titre d'exemple. Ainsi, les butées coulissantes blocables pourront être réalisées sous diverses formes: au lieu de bras télescopiques, tout autre système de fonction équivalente pourra être envisagé; au lieu d'assemblages par soudage on pourra préférer des assemblages démontables, en particulier par boulonnage, par exemple pour les pieds 2.

## Revendications

1. Brouette comportant un châssis à deux bras (1) formant brancard, des pieds de repos (2), un réceptacle (10) et une structure de support (3) maintenant, en position de service, le centre de gravité du réceptacle (10) sensiblement à l'aplomb et au-dessus de l'axe (6) des roues (8) et présentant à son extrémité antérieure une butée d'appui (5) s'étendant de part et d'autre d'un plan longitudinal médian de la brouette caractérisée en ce que l'axe (6) est démontable et adapté à recevoir un nombre variable de roues (8) montées libres en rotation, en des positions axiales réglables déterminées à volonté au moyen de butées axiales (7, 9).

2. Brouette selon la revendication 1, caractérisée en ce que l'axe (6) est monté entre deux paliers (4) fixés à la structure de support (3) avec des prolongements à l'extérieur desdits paliers (4) de façon à ce que des roues (8) puissent être montées, à volonté sur l'axe (6) entre le palier (4) et/ou à l'extérieur de ces paliers.

3. Brouette selon les revendications 1 et 2 caractérisée en ce que la butée d'appui (5) est rectiligne, parallèle, d'une part, au bord antérieur du réceptacle (10) et, d'autre part, à l'axe (6) des roues (8) de telle façon que le plan déterminé par la butée d'appui (5) et le bord du réceptacle (10) soit sensiblement perpendiculaire au plan déterminé par la butée d'appui (5) et l'axe (6), donnant ainsi la possibilité de mettre la brouette dans une position stable sensiblement verticale, en appui sur la butée d'appui (5) et le bord du réceptacle (10).

4. Brouette selon la revendication 3, caractérisée en ce que la butée d'appui (5) s'étend sur une longueur sensiblement égale à celle de l'axe (6).

5. Brouette selon l'une des revendications 1 à 3 caractérisée en ce que les bras (1) sont du type télescopique et réglable en longueur.

## Patentansprüche

1. Schubkarre, welche ein Chassis mit zwei Armen (1), die Holme bilden, Stützfüße (2), eine Wanne (10) und eine Tragkonstruktion (3) aufweist, die in der Arbeitstellung den Schwerpunkt der Wanne (10) im wesentlichen lotrecht über der Achse (6) von Rädern (8) hält und an ihrem vorderen Ende einen Stützanschlag (5) aufweist, der sich beiderseits einer Längsmittelebene der Schubkarre erstreckt, dadurch gekennzeichnet, daß die Achse (6) abnehmbar und zur Aufnahme einer veränderlichen Zahl von frei drehbaren Rädern (8) ausgebildet ist, die mittels axialer Anschläge (7, 9) in nach Belieben regelbaren axialen Stellungen montiert sind.

2. Schubkarre nach Anspruch 1, dadurch gekennzeichnet, daß die Achse (6) zwischen zwei Lagern (4) montiert ist, die an der Tragkonstruktion (3) befestigt sind, und Verlängerungen auf der Außenseite der Lager (4) aufweist, so daß die Räder (8) nach Belieben zwischen den Lagern (4) und/oder auf der Außenseite dieser Lager auf der Achse (6) montiert sein können.

3. Schubkarre nach den Ansprüchen 1 und 2, dadurch gekennzeichnet, daß der Stützanschlag (5) gradlinig, parallel zu einerseits der Vorderkante der Wanne (10) und andererseits der Achse (6) der Räder (8) ist, so daß die durch den Stützanschlag (5) und die Kante der Wanne (10) festgelegte Ebene in wesentlichen senkrecht zu der durch den Stützanschlag (5) und die Achse (6) festgelegten Ebene ist, was die Möglichkeit gibt, die Schubkarre in eine stabile im wesentlichen senkrechte Stellung zu bringen, indem sie sich auf dem Stützanschlag (5) und dem Wannenrand (10) abstützt.

4. Schubkarre nach Anspruch 3, dadurch gekennzeichnet, daß der Stützanschlag (5) sich über eine Länge im wesentlichen gleich der Länge der Achse (6) erstreckt.

5. Schubkarre nach einem der Ansprüche 1 bis 3, dadurch gekennzeichnet, daß die Arme (1) teleskopartig ausgebildet und in ihrer Länge regelbar sind.

## Claims

1. A wheelbarrow comprising a frame having two arms (1) defining handles, supporting legs (2), a load container (10) and a support structure (3) maintaining the center of gravity of the container (10) in working position substantially in vertical alignment with the axle (6) of the wheels (8) and comprising at its forward end an abutment member (5) extending to each side of a longitudinal center plane of the wheelbarrow, characterised in that the axle (6) is removable and adapted to accomodate a variable member of wheels (8) which are idly mounted for rotation in adjustable axial positions which are defined at will by means of axial abutments (7, 9).

2. A wheelbarrow according to claim 1, wherein the wheel axle (6) is mounted in two bearings (4) fixed to support structure (3) with extensions beyond said bearings (4), so that the wheels (8) may be mounted at will on the axle (6) between the bearings (4) and/or beyond said bearings.

3. A wheelbarrow according to claim 1 or 2, wherein the abutment member (5) is straight, parallel to both the forward edge of the container (10) and the axle (6) of wheels (8), so that the plane defined by the abutment member (5) and the edge of the container (10) is substantially perpendicular to the plane defined by the abutment member (5) and said axle, thus giving the possibility of placing the wheelbarrow in a substantially vertical stable storage position in which the wheelbarrow bears on the abutment member (5) and the edge of the container (10).

4. A wheelbarrow according to claim 3, wherein the abutment member (5) is of substantially the same lenght as the axle (6).

5. A wheelbarrow according to any one of claims 1, 2 and 3, wherein the handles (1) are telescopic and of adjustable length.

FIG. 1

FIG. 2

FIG. 3

FIG.4

FIG.5

FIG.6

FIG.7

FIG.8